# EUROPEAN PATENT APPLICATION

(11) **EP 0 540 086 A1**
(43) Date of publication of application: **05.05.1993**
(21) Application number: 92203194.3
(22) Date of filing: 19.10.1992
(51) Int. Cl.: A23L 1/19, A23D 7/00

(54) **Low fat whippable non-dairy cream**

(30) Priority: 28.10.1991 EP 91202769
(71) Applicant: UNILEVER N.V., NL-3000 DK Rotterdam (NL); UNILEVER PLC, London EC4P 4BQ (GB)
(72) Inventor: Svensson, Pia, S-24563 Hjärup (SE); Persson, Helena, S-22647 Sweden (SE)
(74) Representative: Hartong, Richard Leroy

(57) **Abstract**

The invention concerns with sterilisable whippable neutral non-dairy creams with low fat levels (10-20 wt%), that possess excellent properties, like a whipping time less than 6 min. Also a production-process is described, which includes a tempering step to make the NDC whippable within 4 min.

## Description

So far whippable non-dairy creams (= NDC) are known, which comprise water continuous fat emulsions with an aqueous phase, containing optionally some butter milk component and thickener and a fat phase, which contains fat and an emulsifier system. In FR 2 185 018 e.g. NDC's are disclosed, that contain 25-50 wt% of fat. In order to make those NDC's whippable within an acceptable time it is essential that more than 0.5 wt% of a globular protein is incorporated in the NDC, whereas it should not contain any coagulated protein. The pH of these NDC's is 4.2-5.5, which makes these NDC's unsterilisable. In that way an NDC can be obtained with a minimum fat content of 25 wt% that is whippable in about 3 min. Fat contents of 3-25 wt% are also indicated. However, in that instance a fat, high in solids must be applied in addition to the globular protein.

From US 4 107 343 NDC's are known that contain 20-30 wt% of fat. Those NDC's are whippable in 3-5 min, when they contain an inorganic buffer and more than 0.75 wt% of an emulsifier system. The emulsifier system consists of at least three components.

From US 4 637 937 foamable oil-in-water chocolate emulsions are known that contain a chocolate component, whereas the total of all solids in the emulsion must range from 40 to 60%.

Low fat levels make NDC's in general unwhippable with an ordinary domestic, electrical whipper (e.g. a Kenwood-Chef).
This means, that in the general trend to achieve food products with a lower caloric value, whippable creams with a low fat content so far were difficult to make.

We have found novel sterilisable non-dairy creams with low fat contents, that do not require the presence of large amounts of globular proteins, nor the presence of inorganic buffer material, while the whipping properties are excellent. Therefore our invention concerns in the first place with a whippable, low fat non-dairy cream. This new whippable non-dairy cream (NDC) comprises a water continuous emulsion of an aqueous phase, containing thickeners and optionally a butter milk component, preferably butter milk powder (BMP) and a fat phase, comprising fat and an emulsifier system and which NDC is free from inorganic buffering material and contains 10-20 wt% fat, maximum 0.5 wt% of a globular protein and 0.9-2.5 wt% of the emulsifier system and which NDC has a pH= 5.6-7.2 and is whippable within 6 minutes, preferably within 4 minutes, when using a domestic, electrical whipper (i.e. the Kenwood-Chef). Whipping times are measured with a Kenwood Electronic mixer, model KM 201, provided with a 500 Watt motor, applying about 80% of maximum speed (i.e. at 200 rpm).

Although EP 294 119 discloses NDC's with a fat content as low as 15 wt% it does not describe our NDC's. E.g. the fats that must be used according to this EP publication must display a particular N-profile. In the only example an NDC is described that has a fat content of 25 wt%, whereas whipping times are not mentioned. In fact, whipping times would be very long (more than 7 min) when applying the disclosures of EP 294 119 to the low fat NDC's of this same document.

Further whippable non-dairy creams with fat contents of 15-25 wt% are the subject of European Patent Application 91200898.4. However, according to this European Patent Application less than 0.7 wt% of the emulsifier system is present.

Our new NDC preferably contains less than 19 wt%, in particular 15-18 wt% fat, whereas the fat can be chosen from the group consisting of palmkernel, palm kernel stearin, hardened palmkernel, palm midfraction, palm stearin, coconut, hardened coconut, cocoa butter substitutes, butter fat and mixture thereof. We preferably use coconut fat in the fat composition for our NDC's. A preferred fat consists of a mixture of hardened palmkernel m.p. 38°C and coconut. The two components of this last mixture preferably are present in weight ratios of 25:75 - 75:25. Although the fat phase can contain butter fat, we prefer to limit the amount of butter fat in the NDC to a maximum of 10 wt%, preferably less than 4 wt%. At least part of the fat can be replaced by well known fat replacers, e.g. polyol fatty acid polyesters. Examples of these polyesters are described in U.S. Pat. Nos. 3,600,186, 4,005,195 or EP Pat. Publ. Nos. 233,856, 236,288 and 235,836.
The best NDC's are obtained, when we incorporate 1-5 wt% of milk protein, in particular casein into our NDC's. In the composition also an emulsifier system is present. This emulsifier system can consist of every kind of known emulsifier, but preferably polyglycerol esters, lactic acid esters of mono- and/or diglycerides (Lactodan, Grindsted product), lecithines, polyoxyethylene sorbitan fatty acid esters (= Tweens) and/or monoglycerides or mixtures thereof are used.

It is preferred to apply a mixture of lecithin, lactodan and Tween. In that case the amount of lecithin present is 0.2-1.0 wt%, whereas the amounts of lactodan and Tween are 0.5-1.0 wt% Lactodan and 0.2-0,5 wt% Tween.

In order to improve the taste of an NDC it is well known to add some amount of butter milk component to the NDC. We therefore prefer NDC's, that contain up to 10 wt% butter milk powder (BMP).

The thickeners are normally present in an amount of less than 0.5 wt%, preferably 0.5-0.2 wt%. The thickeners can be chosen from the group consisting of locust bean gum, xanthan gum, guar gum, carrageenan or mixtures thereof. The invention also comprises a method for the preparation of the whippable NDC according to the invention, mentioned above.
In the art whippable NDC's are obtained by making an emulsion of an aqueous phase, containing BMP and thickeners and a fat phase, containing the emulsifier system. These two phases are mixed under high shear, preferably homogenised at about 60°C, after which an oil in water premix is obtained.
This premix is treated with steam, according to a UHT-treatment (i.e. about 2.5 seconds with steam of about 150°C), in order to sterilise or pasteurise the premix. Indirect heat treatment via a tubular heat exchanger is also possible.

The sterilised premix is homogenised in general in two stages, after which a sterilised, homogenised product with a temperature of about 60°C is obtained. This product is cooled and stored at a temperature of 5-10°C.

However, when we use this process for the production of low fat NDC's it is often difficult to obtain an NDC, that is whippable within 6 minutes. Often we obtain an NDC that is too stable and that requires very long whipping times, if whipping is possible at all.

We have found a new process, which makes those unwhippable low-fat NDC's whippable within 4 minutes. This new process includes a tempering step at the end of the normal NDC making process. Therefore our NDC manufacturing process comprises the making of an emulsion of a water phase, containing thickener and optionally butter milk component and a fat phase, containing fat and an emulsifier system, processing the so obtained emulsion by heating, sterilisation, homogenisation and cooling to a temperature below 15°C and which process is characterized by a tempering step, which is carried out, after the cooling, by warming the emulsion to ambient temperature (20-25°C) and keeping it at this temperature for several hours, after which the NDC is cooled again to below 15°C.

The emulsion is heated before the sterilisation advantageously to a temperature of 55-85°C. The sterilisation, which is proceeded after this heating is preferably carried out as a UHT-treatment by indirect heating via a tubular heat exchanger or preferably by injecting steam of high temperature (130-150°C) during a short time (less than 30 seconds, preferably 1-5 seconds). The homogenisation is carried out, while the emulsion is at a temperature above the melting point of the fat, preferably at 50-85°C.
The cooling of the NDC after the homogenisation is normally proceeded to a temperature below 15°C, preferably below 10°C.

In the tempering step the emulsion normally is warmed to a temperature of 15-25°C, at which temperature the NDC is kept for 18-30 hours.

### Example I:

An emulsion is made of 84 wt% of an aqueous phase, containing 7 wt% butter milk powder, 0.25 wt% lecithin, 0.6 wt% Lactodan, 0.3 wt% Tween-60, 0.08 wt% carrageenan and 0.04 wt% locust bean gum and 16 wt% of a fat phase, comprising 7 wt% palmkernel 38, 7 wt% coconut oil and 2 wt% butter fat.
This emulsion is heated to 80°C and is treated with steam (145°C) during 3 seconds.
The emulsion so obtained is homogenised, using pressures of 100 and 30 bar in 2 stages after which a sterilised, homogenised product with a temperature of 80°C is obtained. This product is cooled to 8°C and is stored at 5°C for 1 week.

This product is warmed again to 20°C and is kept at this temperature for 24 hours and cooled again to 5°C and stored for 1 week.

The NDC showed excellent properties, such as a whipping time of 2-3 mins.

## Claims

1. Whippable non-dairy cream (NDC), comprising a water continuous emulsion of an aqueous phase, containing thickeners and optionally butter milk component and a fat phase, comprising fat and an emulsifier system, wherein the NDC is free from inorganic, buffering material and contains 10-20 wt% fat, 0-0.5 wt% of a globular protein and 0.9-2.5 wt% of the emulsifier system, while the pH of the NDC is 5.6-7.2 and the NDC is whippable within 6 minutes when using a domestic, electrical whipper.

2. Whippable NDC according to claim 1, which is whippable within 4 min.

3. Whippable NDC according to Claims 1 and 2, wherein the NDC contains 15-18 wt% fat.

4. Whippable NDC according to claims 1 to 3, wherein the fat is chosen from the group: palmkernel, hardened palmkernel, palm midfraction, palm stearin, palmkernel stearin, coconut, hardened coconut, cocoa butter substitutes, butter fat or mixtures thereof.

5. Whippable NDC, according to claims 1-4, wherein the fat contains coconut fat.

6. Whippable NDC, according to Claim 4, wherein the fat is a mixture of palm kernel m.pt. 38°C and coconut oil.

7. Whippable NDC, according to Claim 6, wherein the fat is a mixture of palm kernel m.pt. 38°C and coconut oil with a ratio of the components within 25/75 and 75/25.

8. Whippable NDC, according to Claim 1, wherein the NDC contains less than 10 wt% butter fat.

9. Whippable NDC, according to claim 1, wherein the NDC contains 1-5 wt% of milk protein, in particular casein.

10. Whippable NDC according to Claim 1, wherein polyglycerol esters, lactic acid esters of mono- and/or diglycerides (Lactodan), lecithin polyoxyethylene sorbitan fatty acid esters (= Tweens) and/or monoglycerides or mixtures thereof are present as emulsifier.

11. Whippable NDC, according to claims 1-10, wherein 0.05-0.2 wt% of thickeners chosen from locust bean gum, xanthan gum, guar gum, carrageenan or mixtures thereof is present.

12. Whippable NDC according to Claim 10-11, wherein 0.2-1.0 wt% lecithin , 0.5-1.0 wt% lactic acid esters of glycerides (Lactodan), 0.2-0.5 wt% polyoxyethylene sorbitan esters (Tweens) are present.

13. Process for the preparation of a whippable NDC by making an emulsion of a water phase, containing thickener and optionally butter milk component and thickener and a fat phase, containing fat and an emulsifier system, processing the so obtained emulsion by heating, sterilisation, homogenisation and cooling to a temperature below 15°C, characterised by a tempering step, which is carried out after the cooling by warming the cooled emulsion to ambient temperature and keeping it at this temperature for several hours after which the NDC is cooled again below 15°C.

14. Process according to Claim 13, wherein the emulsion is heated to 55-85°C before the sterilisation.

15. Process according to Claims 13 and 14, wherein the sterilisation is carried out as a UHT-treatment by injecting steam of high temperature during a short time.

16. Process according to claims 13-15 wherein the homogenisation is carried out, while the emulsion is at a temperature of 50-85°C.

17. Process according to Claim 13, wherein the cooling after the homogenisation is proceeded to a temperature of maximum 10°C.

18. Process according to Claim 13, wherein the emulsion is warmed to a temperature of 15-25°C and kept at this temperature for 18-30 hours.
